# FASCICULE DE BREVET EUROPEEN

(11) **EP 0 461 008 B1**
(45) Date de publication et mention de la délivrance du brevet: **11.08.1993**
(21) Numéro de dépôt: 91401412.1
(22) Date de dépôt: 30.05.1991
(51) Int. Cl.: B60J 7/043

(54) **Toit ouvrant pour véhicule automobile**
Kraftfahrzeugschiebedach
Sliding roof for motor vehicle

(30) Priorité: 08.06.1990 FR 9007159
(43) Date de publication de la demande: 11.12.1991
(73) Titulaire: Etablissements FARNIER ET PENIN, F-79300 Bressuire (FR)
(72) Inventeur: Ouvrard, Gaston, F-79300 Bressuire (FR); Memeteau, Michel, F-79330 St Varent (FR)
(74) Mandataire: Robert, Jean-Pierre

(56) Documents cités:
- EP-A- 0 308 332

## Description

La présente invention concerne un toit ouvrant pour véhicule automobile et plus particulièrement les moyens de guidage du déplacement de ce dernier par rapport au pavillon sur lequel il est installé.

Il existe de nombreux dispositifs de toit ouvrant pour véhicules automobiles que ceux-ci soient coulissants ou pivotants. Un tel dispositif pour guide un panneau coulissant est connu par exemple par EP-A-308 332.

Dans le domaine des toits coulissants, on citera deux types de toits : ceux dont le panneau mobile coulisse dans un plan sensiblement parallèle à celui du pavillon (sur ou sous celui-ci) et ceux qui ont un mouvement de louvoiement au début de la course d'ouverture ou à la fin de la course de fermeture, afin d'être fermement appliqués en position de fermeture.

Le louvoiement du panneau résulte de la coopération de patins de coulissement latéraux solidaires du panneau à l'avant et à l'arrière de celui-ci avec des rails fixés à la structure du véhicule, par l'intermédiaire d'un cadre rapporté sur les bords de l'ouverture, pour les rails de guidage des patins avant et directement du pavillon jour les rails de guidage des patins arrière.

Ces toits ouvrants à louvoiement ne présentent pas d'inconvénients majeurs lorsqu'ils sont installés, en général de série, pour s'escamoter sous le pavillon au-dessus de sa garniture interne. En effet, les rails de guidage des patins arrière sont fixés de manière cachée et à l'abri des agents atmosphériques.

En revanche, pour le cas des toits coulissants au-dessus du pavillon, et c'est le cas des toits rapportés en seconde monte sur des véhicules qui n'en étaient pas pourvus de fabrication, ces rails arrière présentent de nombreux inconvénients.

Tout d'abord, ils demandent au moins un point de fixation direct sur le toit du véhicule, ce qui implique la réalisation d' un orifice dont il faut assurer l'étanchéité. En outre, ces rails constituent des appendices derrière le panneau, lorsque celui-ci est fermé, qui nuisent à l'esthétique du véhicule et sont générateurs de bruits aérodynamiques. Enfin le montage de ces rails constitue une opération d'intervention sur le pavillon du véhicule, en plus de l'ouverture principale, qui demande un outillage plus compliqué et plus nombreux (gabarit...) et qui est source de montages défectueux.

La présente invention, pour remédier à ces inconvénients, entend proposer un toit ouvrant dans lequel les moyens de guidage du panneau sont conçus pour être limités en longueur à la dimension du panneau mesurée dans l'axe du véhicule, ce qui apporte de nombreux avantages tant au montage qu'à l'utilisation.

A cet effet, elle a donc pour objet un dispositif de toit ouvrant pour véhicule automobile comportant un panneau mobile entre une première position dans laquelle il obture une ouverture ménagée dans le pavillon du véhicule et une seconde position dais laquelle il s'étend au moins partiellement au-dessus du pavillon à l'arrière de cette ouverture, et des moyens de guidage du panneau dans son mouvement entre la première et la seconde position, caractérisé en ce que ces moyens de guidage comprennent, de chaque côté du panneau, un rail latéral fixe de coulissement situé le long du côté longitudinal correspondant de l'ouverture de pavillon et de longueur sensiblement limitée à celle de ce côté,présentant une surface continue inférieure le long d'un bord latéral de l'ouverture et un patin arrière en saillie au-dessus de cette surface, et une semelle de coulissement solidaire du bord latéral du panneau reposant sur le patin arrière du rail fixe et présentant à l'avant du patin inférieur en saillie sous cette semelle, reposant sur la surface continue du rail.

Cette disposition permet de limiter les éléments fixes de guidage du panneau à la longueur du côté de l'ouverture mesurée dans le sens longitudinal du véhicule; ils ne possèdent ainsi aucune partie s'étendant au-dessus du pavillon où il faut les fixer. Ces éléments fixes de guidage font alors partie intégrante du cadre de montage du toit ouvrant. Ainsi les problèmes rappelés en préambule sont-ils résolus de manière élégante, et la solution proposée va à l'encontre de la pratique habituelle selon laquelle il convient de guider le panneau par au moins quatre points (deux par côtés), les points de chaque paire latérale étant éloignés l'un de l'autre le plus possible, quelle que soit la position du panneau le long de sa course. Le guidage ainsi réalisé est une condition essentielle pour la stabilité du panneau, pour son maintien sans vibrations et pour sa tenue à l'encontre des forces aérodynamiques qu'il subit. L'invention, à l'encontre de ce préjugé, a considéré que guidage , stabilité et maintien du panneau étaient conservés même si l'écartement longitudinal des points de guidage variait selon la position du panneau le long des glissières.

L'invention est, dans son mode de réalisation préféré, relative à un panneau coulissant avec un louvoiement du mouvement au voisinage de sa première position. Dans ce cas, la surface inférieure du rail fixe présente à son extrémité opposée au patin fixe un évidement pour recevoir le patin avant de la semelle de glissement, cette dernière étant de longueur au plus égale à la distance séparant l'évidement du patin arrière. On comprend que lorsque le patin mobile tombe dans l'évidement, la semelle quitte le patin arrière fixe pour reposer sur la surface de glissement du rail. On a donc créé un louvoiement du panneau qui est avantageux pour assurer l'étanchéité de l'obturation de l'ouverture. Le louvoiement est assuré de manière simple et s'opère d'autant plus aisément que l'évidement, le patin arrière fixe, le bord arrière de la semelle de glissement et le patin mobile comportent des bords inclinés formant rampes de glissement des uns sur les autres lors du passage du panneau de l'une vers l'autre de ses positions.

Enfin, afin d'assurer une fermeture ferme et étanche de l'ouverture par le panneau dans sa première position, le dispositif comprend au moins une surface de came fixe à l'avant, qui constitue une surface de glissement, inclinée vers le bas et vers l'avant, pour le bord avant du panneau lorsque celui-ci approche la première position, tandis que le panneau comprend sous son bord arrière, au moins un organe d'accrochage distant de la face inférieure du panneau pour le passage entre cette face et cet organe d'une cale de blocage fixe comportant une surface de came inférieure inclinée vers l'avant et vers le bas.

D'autres caractéristiques et avantages ressortiront de la description d'un mode de réalisation de l'invention donné ci-après à titre indicatif.

Il sera fait référence aux dessins annexés dans lesquels :
- la figure 1 est une vue schématique de dessus d'un pavillon de véhicule équipé du dispositif selon l'invention,
- la figure 2A est une vue en coupe selon la ligne II-II de la figure 1,
- la figure 2B est une vue en coupe partielle de la figure 2A selon la ligne B-B,
- les figures 3A et 3B sont des vues en coupe de la figure 1 selon la ligne III-III, le panneau mobile étant, à la figure 3A dans sa seconde position, et dans sa première position à la figure 3B,
- la figure 4 est une vue en coupe suivant la ligne IV-IV de la figure 1,
- la figure 5 est une vue en coupe selon la ligne V-V de la figure 1.

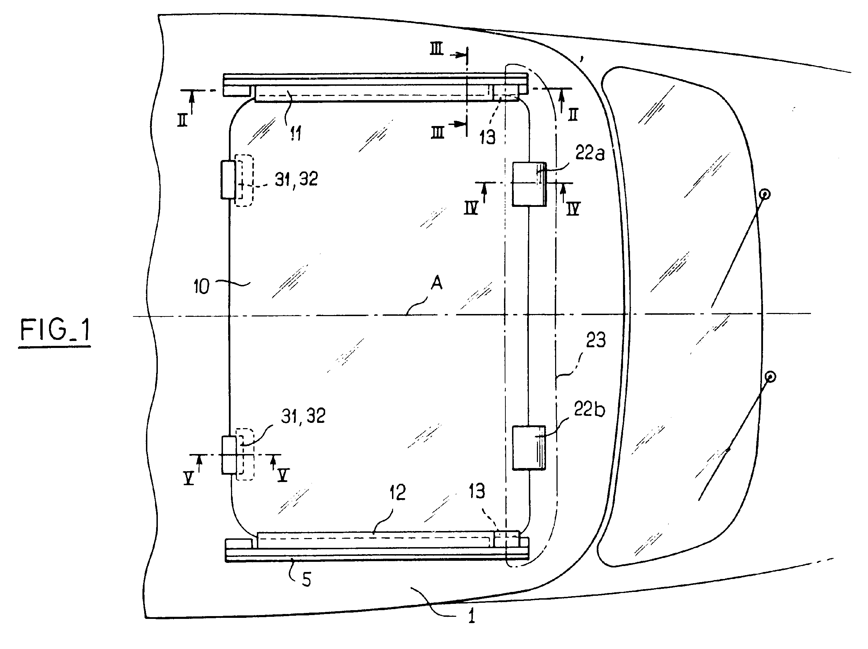

A la figure 1 on a représenté le pavillon 1 d'un véhicule dans lequel, de manière connue, on a pratiqué une ouverture sensiblement rectangulaire. On rappellera brièvement que le montage d'un toit ouvrant consiste à placer, autour de l'ouverture, un cadre qui, d'une part constitue le support pour les éléments mobiles et, d'autre part constitue un élément de référence stable et rigide pour le réglage des éléments entre eux et le maintien des joints d'étanchéité.

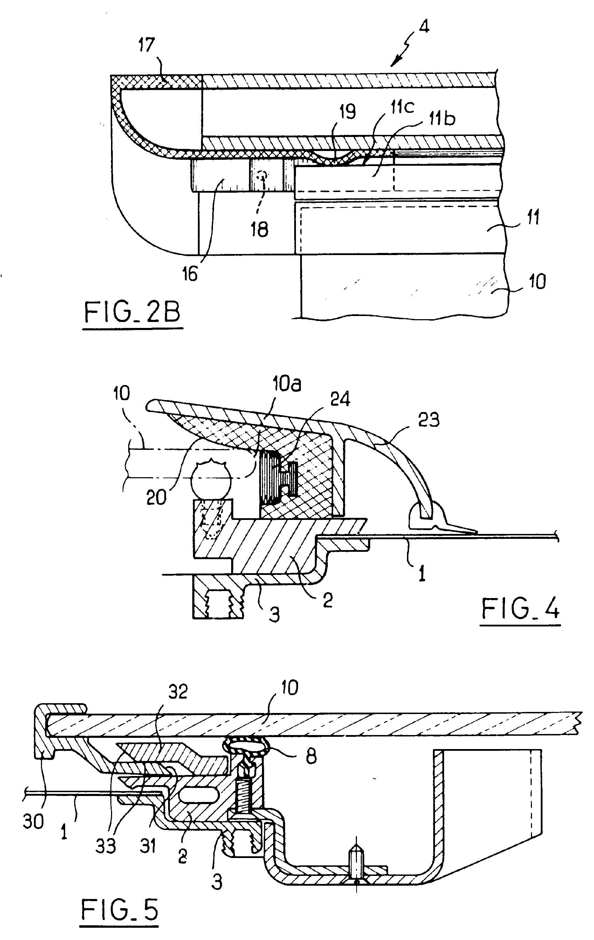

Dans les figures en coupe, on reconnaîtra un élément de ce cadre qui porte la référence 2, qui porte un joint d'étanchéité 8 et qui est fixé autour de l'ouverture grâce à un contre-cadre intérieur (3 sur les figures 4 et 5).

Le dispositif de toit ouvrant comporte des glissières 4 et 5 orientées parallèlement à l'axe longitudinal A du véhicule, dont la forme générale est celle d'un rail rectiligne de section en U, ouvert en regard de l'autre glissière. Ces glissières sont fixées au cadre 2 par l'aile inférieure 6a du U qui possède une extension à cet effet. L'intérieur de chaque glissière est garni d'un revêtement 7 en matière synthétique, qui favorise le glissement des bords d'un panneau mobile et qui assure une certaine étanchéité par des languettes 7a de ce revêtement. Les languettes 7a inférieures constituent la surface de coulissement du panneau dans chaque glissière.

Ces glissières parallèles reçoivent à coulissement un panneau mobile 10, ou plus exactement les profils 11 et 12 de coulissement de ce panneau 10 qui chaussent ses deux bords latéraux. Chacun de ces profils, comme celui 11 des figures, comporte donc une partie 11a qui emboîte le bord du panneau 10 et une semelle de coulissement 11b qui est logée dans la glissière correspondante. Cette semelle présente deux caractéristiques. La première consiste en un patin 13 prévu à sa partie avant et qui fait saillie sous cette semelle. La seconde est une extrémité arrière 14 biseautée de manière à présenter une rampe de glissement dont on expliquera le rôle ci-dessous.

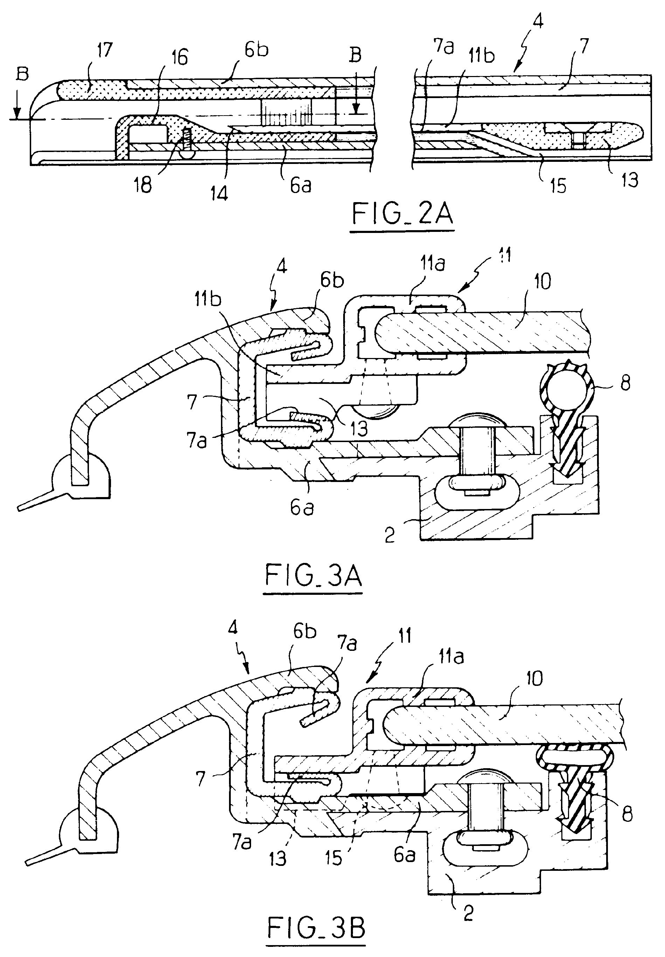

La longueur de chaque semelle est sensiblement égale à la largeur du panneau mobile 10 et la longueur de chaque glissière 4, 5 est légèrement supérieure à celle de chaque semelle de sorte que, lorsque le panneau 10 est dans sa position d'obturation de l'ouverture, la semelle de glissement 11b est totalement logée dans la glissière, comme illustré à la figure 2A,la longueur de cette glissière étant limitée à la dimension longitudinale de l'ouverture du pavillon. A cet égard, on notera que l'aile inférieure 6a de chacune des glissières possède, en partie avant, un évidemment 15 pour recevoir le patin inférieur 13 et à l'arrière, un patin fixe 16 qui est situé au-delà de l'extrémité 14 de la semelle 11b lorsque le panneau est dans sa position d'obturation de l'ouverture.

Le patin 13, l'évidement 15 et le patin 16 possèdent des bords en pente qui permettent à la semelle 11b de coulisser dans la glissière 4 sans difficulté tant dans un sens que dans l'autre.

La distance séparant les deux ailes 6a et 6b de chaque glissière, mesurée bien entendu à l'intérieur de la garniture 7, est au moins égale à l'épaisseur de la semelle 11b mesurée au niveau du patin 13. Cette épaisseur diminuée de celle de la semelle 11b dans sa partie courante, est égale à la hauteur du patin 16.

On comprend que, par cette disposition, la semelle 11b de chaque profil, donc le panneau 10 possède un mouvement de louvoiement au voisinage de sa position de fermeture, puisque dans cette position grâce au patin 16 quitté par l'arrière de la semelle et à l'évidement 15 qui accueille le patin 13, la semelle 11b change de niveau dans la glissière. Les figures 3A et 3B illustrent les deux niveaux du panneau 10 par rapport aux glissières. Dans la position d'obturation (figure 3B) le louvoiement du panneau vers le bas permet un écrasement du joint 8, donc d'assurer une étanchéité correcte. En revanche, le coulissement du panneau dans les glissières s'opère entre la semelle 11b et le patin 16 et entre la surface inférieure de l'aile 6a et le patin 13, le panneau étant alors éloigné du joint 8 qu'il ne touche pas, donc n'use ou ne déforme pas lors des mouvements (figure 3A). On remarquera que dans toutes les positions autres que celle d'obturation, le guidage du panneau est assuré en quatre points : deux fixes au niveau des patins 16 et deux mobiles avec le panneau au niveau des patins 13. Par le choix des épaisseurs des écartements et du matériau de garniture, on peut réaliser un glissement dur du patin 15 entre les lèvres 7a et de la semelle 11b au-dessus du patin 16.

Les figures 2A et 2B montrent qu'en réalité, pour une fabrication plus rationnelle, le patin 16 appartient à une extrémité rapportée 17 des glissières 4, 5 en matière synthétique et d'épaisseur sensiblement identique à celle de la garniture 7. Cette extrémité est fixée par une vis 18 dans l'aile inférieure 6a de la glissière. On notera qu'elle comporte latéralement un bossage intérieur 19 sur lequel frotte le bord longitudinal extrême 11c de la semelle de glissement. Ce bossage constitue un guide latéral du panneau,souple puisqu'en matière plastique et que la paroi qui porte ce bossage est déformable. Cette paroi 19 maintient également le panneau montre les vibrations verticales auxquelles il peut être soumis, puisqu'un jeu fonctionnel est nécessaire entre l'aile 11b et l'aile supérieure 6b (garnie) de la glissière. Le rôle des languettes 7a est également de réduire et d'amortir ces vibrations verticales.

L'immobilisation du panneau 10 dans n'importe quelle position dans les glissières est assurée de la manière suivante.

Pour la position d'ouverture, plus ou moins grande, le panneau est immobilisé par son mécanisme d'entraînement, généralement constitué par des câbles crémaillères solidaires de manière connue, par l'une de leurs extrémités de la partie avant du panneau au voisinage des glissières, et coopérant avec une roue dentée d'entraînement fixée à l'arrière du cadre. En rendant la liaison roue/câbles crémaillères irréversible, on bloque le panneau 10 dans n'importe quelle position intermédiaire. La butée entre le patin 16 et le patin 13 en fin de course d'ouverture constitue une sécurité qui en fonctionnement n'est jamais atteinte.

En position de fermeture, le blocage par les câbles crémaillères n'est pas suffisant, car le panneau possède un degré de liberté vertical dans les glissières 4, 5 du fait de son abaissement. En effet, dans les dispositifs connus à louvoiement, la position basse est obtenue par l'existence, au niveau du guidage, d'une surface de guidage qui force le patin à descendre. Cette disposition n'est possible que si le guidage est assuré par des pattes de coulissement. Or, les glissières courtes de l'invention importent des semelles 11b de coulissement continues.

Pour maintenir le panneau en pression sur le joint 8 d'étanchéité en fin de louvoiement de fermeture, on a disposé sur le bord avant du cadre 2 une surface de came 20 (figure 4) en deux endroits 22a, 22b (figure 1) de ce bord avant, à l'intérieur d'un cache 23 profilé. Ainsi lorsque le panneau 10 commence à louvoyer, son bord avant 10a frotte sur la surface 10 qui constitue un coin de blocage interdisant un mouvement vertical du panneau. Un joint amortisseur 24 est prévu au fond de cette pièce.

Le panneau 10 comporte sur son bord arrière deux crochets comme celui 30 de la figure 5, en retour sous sa face inférieure, à distance de celle-ci, qui comporte une extrémité en biseau 31 susceptible de glisser, au moment du louvoiement du panneau, sous une patte d'accrochage 32 fixée au cadre 2 et possédant une surface de came 33 inclinée vers le bas. Le panneau ainsi tenu à l'avant et à l'arrière dans sa position basse contre le joint 8 qu'il écrase partiellement, obture de manière étanche l'ouverture.

Les dispositions selon l'invention permettent le montage d'un dispositif de toit ouvrant simple et esthétique et qui, de manière surprenante, malgré l'absence de guidage arrière, possède un panneau fermement tenu dans toutes ses positions.

## Revendications

1. Dispositif de toit ouvrant pour véhicule automobile comportant un panneau mobile (10) entre une première position dans laquelle il obture une ouverture ménagée dans le pavillon (1) du véhicule et une seconde position dans laquelle il s'étend au moins partiellement au-dessus du pavillon (1) à l'arrière de cette ouverture, et des moyens de guidage (4,5) du panneau dans son mouvement entre la première et la seconde position, caractérisé en ce que ces moyens de guidage comprennent, de chaque côté du panneau, un rail latéral (4,5) fixe de coulissement situé le long du côté longitudinal de l'ouverture de pavillon et de longueur sensiblement égale à celle de ce côté et présentant une surface continue inférieure (7a) le long d'un bord latéral de l'ouverture et un patin arrière (16) en saillie au-dessus de cette surface, et une semelle de coulissement (11b) solidaire du bord latéral du panneau (10) et de longueur sensiblement égale à celle de ce bord latéral, reposant sur le patin arrière (16) du rail fixe et présentant à l'avant un patin inférieur (13) en saillie sous cette semelle (11b) reposant sur la surface continue (17a) du rail.

2. Dispositif selon la revendication 1 caractérisé en ce que la surface (7a) inférieure du rail fixe présente à son extrémité opposée au patin fixe un évidement (15) pour recevoir le patin avant (13) de la semelle de glissement (11b), cette dernière étant de longueur au plus égale à la distance séparant l'évidement (15) du patin arrière (16).

3. Dispositif selon la revendication 2 caractérisé en ce que l'évidement (15),le patin arrière fixe (13),le bord arrière (14) de la semelle de glissement (11b) et le patin mobile (13) comportent des bords inclinés formant rampes de glissement des uns sur les autres lors du passage du panneau (10) de l'une vers l'autre de ses positions.

4. Dispositif selon l'une des revendications 2 et 3 caractérisé en ce qu'il comprend au moins une surface de came (20) fixe à l'avant, qui constitue une surface de glissement, inclinée vers le bas et vers l'avant, pour le bord avant du panneau, (10) lorsque celui-ci approche la première position.

5. Dispositif selon l'une des revendications 2 à 4 caractérisé en ce que le panneau comprend sous son bord arrière, au moins un organe d'accrochage (30) distant de la face inférieure du panneau (10) pour le passage entre cette face et cet organe (30) d'une patte de blocage fixe (32) comportant une surface de came inférieure (33) inclinée vers l'avant et vers le bas.

6. Dispositif selon l'une quelconque des revendications précédentes, caractérisé en ce que le patin arrière fixe (16) est porté par une pièce (17) rapportée à l'extrémité du rail latéral fixe.

7. Dispositif selon la revendication 6 caractérisé en ce que cette pièce rapportée (17) est en matière plastique et possède un bossage latéral (19) intérieur de guidage du bord de la semelle (11b) de glissement.

## Patentansprüche

1. Schiebedachvorrichtung für Kraftfahrzeuge, umfassend eine Platte (10), die zwischen einer ersten Position, in der sie eine in dem Dach (1) des Fahrzeuges ausgebildete Öffnung verschließt, und einer zweiten Position beweglich ist, in der sie sich zumindest teilweise von der Öffnung nach hinten über das Dach (1) erstreckt, und Führungsmittel (4, 5) zum Führen der Platte (10) bei ihrer Bewegung zwischen der ersten und der zweiten Position, **dadurch gekennzeichnet,** daß die Führungsmittel auf jeder Seite der Platte eine entlang der Längsseite der Dachöffnung angeordnete seitliche feststehende Gleitschiene (4, 5), deren Länge im wesentlichen gleich der Länge dieser Seite ist und die entlang einem Seitenrand der Öffnung eine durchgehende untere Fläche (7a) sowie ein nach oben über diese Fläche vorspringendes hinteres Gleitstück (16) hat, und einen mit einem Seitenrand der Platte (10) verbundenen Gleitflansch (11b) umfassen, dessen Länge im wesentlichen gleich der des Seitenrandes ist, der auf dem rückwärtigen Gleitstück (16) der feststehenden Schiene aufliegt und der vorne ein unteres Gleitstück (13) hat, das von dem Gleitflansch (11b) nach unten vorspringt und auf der durchgehenden Fläche (17a) der Schiene aufliegt.

2. Vorrichtung nach Anspruch 1, **dadurch gekennzeichnet,** daß die untere Fläche (7a) der feststehenden Schiene an ihrem dem feststehenden Gleitstück entgegengesetzten Ende eine Aussparung (15) zur Aufnahme des vorderen Gleitstückes (13) des Gleitflansches (11b) hat, wobei die Länge des letzteren mindestens gleich dem Abstand ist, welcher die Aussparung (15) von dem hinteren Gleitstück (16) trennt.

3. Vorrichtung nach Anspruch 2, **dadurch gekennzeichnet,** daß die Aussparung (15), das hintere feststehende Gleitstück (13), der hinter Rand (14) des Gleitflansches (11b) und das bewegliche Gleitstück (13) geneigte Randflächen haben, welche Gleitrampen formen, die während des Überganges der Platte (10) aus einer ihrer Positionen in die jeweils andere aufeinander gleiten.

4. Vorrichtung nach einem der Ansprüche 2 und 3, **dadurch gekennzeichnet,** daß sie vorne mindestens eine Nockenfläche (20) umfaßt, welche eine nach vorne und unten geneigte Gleitfläche für den vorderen Rand der Platte (10) bildet, wenn diese sich ihrer ersten Position annähert.

5. Vorrichtung nach einem der Ansprüche 2 bis 4, **dadurch gekennzeichnet,** daß die Platte unter ihrem hinteren Rand mindestens ein Befestigungsorgan (30) hat, das einen Abstand von der Unterseite der Platte (10) für den Durchtritt einer feststehenden Verriegelungszunge (32) zwischen dieser Fläche und diesem Organ (30) hat wobei die Verriegelungszunge (32) eine nach vorne und unten geneigte untere Steuerfläche (33) hat.

6. Vorrichtung nach einem der vorhergehenden Ansprüche, **dadurch gekennzeichnet,** daß das rückwärtige feststehende Gleitstück (16) an einem Teil (17) gehalten ist, welches auf das Ende der feststehenden seitlichen Schiene aufgesetzt ist.

7. Vorrichtung nach Anspruch 6, **dadurch gekennzeichnet,** daß dieses aufgesetzte Teil (17) aus Kunststoff besteht und einen seitlichen inneren Führungswulst (19) für den Rand des Gleitflansches (11b) hat.

## Claims

1. An openable roof arrangement for a motor vehicle, comprising a panel (10) movable between a first position in rich it closes an opening provided in the roof top (1) of the vehicle and a second position in rich it extends at least partially above the roof top (1) to the rear of said opening, and means (4, 5) for guiding the panel in its movement between the first and second positions, characterised in that said guide means comprise, on each side of the panel, a fixed lateral sliding rail (4, 5) disposed along the longitudinal side of the roof top opening and of a length substantially equal to that of said side and having a continuous lower surface (7a) along a lateral edge of the opening and a rear slide portion (16) projecting above said surface, and a sliding plate portion (11b) fixed with respect to the lateral edge of the panel (10) and of a length substantially equal to that of said lateral edge, resting on the rear slide portion (16) of the fixed rail and having at the front a lower slide portion (13) projecting below said plate portion (11b) rich rests on the continuous surface (7a) of the rail.

2. An arrangement according to claim 1 characterised in that the lower surface (7a) of the fixed rail has at its end opposite to the fixed slide portion a recess (15) for receiving the front slide portion (13) of the sliding plate portion (11b), the latter being of a length at most equal to the distance separating the recess (15) from the rear slide portion (16).

3. An arrangement according to claim 2 characterised in that the recess (15), the fixed rear slide portion (13), the rear edge (14) of the sliding plate portion (11b) and the movable slide portion (13) comprise inclined edges forming ramps for sliding movement of the ones on the others when the panel (10) moves from one of its positions towards the other.

4. An arrangement according to one of claims 2 and 3 characterised in that it comprises at least one fixed cam surface (20) at the front, rich constitutes a sliding surface, being inclined downwardly and forwardly, for the front edge of the panel (10) when it approaches the first position.

5. An arrangement according to one of claims 2 to 4 characterised in that under its rear edge the panel comprises at least one latching member (30) rich is spaced from the downward face of the panel (10) for a fixed locking lug (32) to pass between said face and said member (30), the locking lug comprising a lower cam surface (33) rich is inclined forwardly and downwardly.

6. An arrangement according to any one of the preceding claims characterised in that the fixed rear slide portion (16) is carried by a member (17) rich is fitted to the end of the fixed lateral rail.

7. An arrangement according to claim 6 characterised in that said fitted member (17) is of plastics material and has an intemal lateral boss configuration (19) for guiding the edge of the sliding plate portion (11b).
